# EUROPÄISCHE PATENTANMELDUNG

(11) **EP 1 317 012 A2**
(43) Veröffentlichungstag der Anmeldung: **04.06.2003**
(21) Anmeldenummer: 02026639.1
(22) Anmeldetag: 29.11.2002
(51) Int. Cl.: H01M 10/40

(54) **Verfahren zur Herstellung von galvanischen Elementen mit einem flüssigen organischen Elektrolyten**

(30) Priorität: 03.12.2001 DE 10159230
(71) Anmelder: VARTA Microbattery GmbH, 30419 Hannover (DE)
(72) Erfinder: Birke-Salam, Fatima, Dr., 73479 Ellwangen (DE); Birke, Peter, Dr., 73479 Ellwangen (DE); Holl, Konrad, Dr., 73434 Aalen-Dewangen (DE); Stelzig, Heinrich, 73494 Rosenberg (DE); Illic, Dejan, Dr., 73479 Ellwangen (DE)
(74) Vertreter: Patentanwälte , Ruff, Wilhelm, Beier, Dauster & Partner

(57) **Zusammenfassung**

Bei einem Verfahren zur Herstellung von galvanischen Elementen mit einem flüssigen organischen Elektrolyten, die einen Separator/Elektrodenverbund enthalten, der mindestens eine Lithium interkalierende Elektrode besitzt, in deren Polymermatrix im Polymer unlösliche elektrochemisch aktive Materialien fein dispergiert sind, enthält der Elektrolyt zwischen 2 und 15 Gewichtsprozent einer Kohlen-Wasserstoff-Sauerstoffverbindung (Carbonat), die ein zentrales Kohlenstoffatom besitzt, an das ein Sauerstoffatom doppelt und zwei Sauerstoffatome einfach gebunden sind, wobei der einfach gebundene Sauerstoff nicht durch weitere Atome oder Gruppen abgesättigt ist und sich an die einfach gebundenen Sauerstoffatome je eine Kohlenwasserstoffkette anschließt, deren Länge maximal vier Kohlenstoffatome beträgt und sich die zwei Ketten um mindestens eine aber höchstens drei CH₂-Gruppen unterscheiden und mit dieser Elektrolytmischung wird ein Elektrode/Separatorverbund zuerst getränkt, dann zugeschnitten und anschließend in ein Gehäuse eingebracht. Der Separator/Elektrodenverbund kann vor der Tränkung mit einem flüssigen organischen Elektrolyten auf einen Ableiter und/oder eine Gegenelektrode auflaminiert werden und auch in Form einer Rolle getränkt werden.

## Beschreibung

Die Erfindung betrifft ein Verfahren zur Herstellung von galvanischen Elementen mit einem flüssigen organischen Elektrolyten, die einen Separator/Elektrodenverbund enthalten, der mindestens eine Lithium interkalierende Elektrode besitzt, in deren Polymermatrix im Polymer unlösliche elektrochemisch aktive Materialien fein dispergiert sind und nach dem beschriebenen Verfahren hergestellte galvanische Elemente.

Im Allgemeinen werden Elektroden erst in Batteriegehäuse, sogenannte Halbteile eingebracht, und dann wird Elektrolyt eindosiert. Immer dann, wenn jedoch extrem flache Energiespeicher mit Bauhöhen von weniger als 0,5 mm, beispielsweise zur Anwendung in "Active Smart Cards" benötigt werden, ist ein solches Vorgehen nicht mehr möglich, da sehr leicht eine Kontamination des Siegelbereiches von Becher und Deckel mit Elektrolyt stattfindet, weil es bei solchen Flachzellen keine Vertiefungen des Gehäuses gibt, in die der Elektrolyt zurücksickern könnte. Dies schließt auch die Anwendung von elektrolytgetränkten Pasten aus.

Für ein 3 Volt-Primärsystem mit Lithiummetall und MnO₂-basierender Kathode ist der Elektrolyt in der Regel Lithiumperchlorat, LiClO₄, oder Lithiumtrifluoromethansulfonat, CF₃SO₃Li, in PC (Propylencarbonat) gelöst, gegebenenfalls wird noch ein Viskositätserniedriger wie Dimethoxyethan beigegeben. Der WO 00/57504 ist beispielsweise eine Dünnschichtzelle zu entnehmen, bei der die positive Elektrode aus einer Pastenmischung von MnO₂, Kohle und Elektrolyt hergestellt wird, wobei die Paste in einen Rahmen einpastiert wird. Für ein wiederaufladbares 4 Volt-System mit Kohlenstoffanode und LiMeO₂ Kathode (Me=Ni, Co, Mn) kommen Lithiumhexafluorphosphat, LiPF₆, in Mischungen aus EC (Ethylencarbonat), PC (Propylencarbonat), DMC (Dimethylcarbonat), EMC (Ethylmethylcarbonat), DEC (Diethylcarbonat) oder daraus abgeleiteten Carbonaten zum Einsatz. Die Verwendung von Polymerelektrolyten aus einem Film aus einem Copolymer von Polyvinylidendifluorid-Hexafluorpropylen und derartigen darin verteilten Mischungen ist dem US-Patent 5 296 318 zu entnehmen.

Der Erfindung liegt die Aufgabe zugrunde, ein Verfahren zur Herstellung von galvanischen Elementen mit einem flüssigen organischen Elektrolyten anzugeben, bei welchem insbesondere die Kontamination von Gehäuseteilen mit Elektrolyt verhindert wird und damit eine einwandfreie Versiegelung und Abdichtung der Gehäusehalbteile ermöglicht wird.

Diese Aufgabe wird bei einem galvanischen Element der eingangs angegebenen Gattung erfindungsgemäß durch die kennzeichnenden Merkmale des Anspruchs 1 gelöst. In den Unteransprüchen sind vorteilhafte Ausgestaltungen des Verfahrens und nach dem Verfahren hergestellte galvanische Elemente angegeben.

Beim erfindungsgemäßen Verfahren enthält der Elektrolyt zwischen 2 und 15 Gewichtsprozent einer Kohlen-Wasserstoff-Sauerstoffverbindung (Carbonat), die ein zentrales Kohlenstoffatom besitzt, an das ein Sauerstoffatom doppelt und zwei Sauerstoffatome einfach gebunden sind, wobei der einfach gebundene Sauerstoff nicht durch weitere Atome oder Gruppen abgesättigt ist und sich an die einfach gebundenen Sauerstoffatome je eine Kohlenwasserstoffkette anschließt, deren Länge maximal vier Kohlenstoffe beträgt und sich die zwei Ketten um mindestens eine aber höchstens drei CH₂-Gruppen unterscheiden. Mit dieser Elektrolytmischung wird der Separator/Elektrodenverbund zuerst getränkt, dann zugeschnitten und anschließend in ein Gehäuse eingebracht.

Der erfindungsgemäße organische Elektrolyt mit nicht zyklischen Carbonaten, die keinerlei Symmetrielinie besitzen, ist besonders vorteilhaft im Hinblick auf schnelles Eindringen in und geringes Abdampfen aus dem Separator/Elektrodenverbund, denn dieser Elektrolyt enthält somit asymmetrische, polare Lösemittel, die die Oberflächenspannung herabsetzen und damit eine gleichmäßige und schnelle Penetration des Elektrolyten in den Zellverbund ermöglichen. Weiterhin wird der Dampfdruck des Elektrolyten in der Zelle selbst herabgesetzt, der durch die van der Waalsche Kräfte zwischen dem Elektrolyten und dem Separator/Elektrodenverbund durch den polaren Charakter wenigstens eines Elektrolyt-Lösemittelbestandteils aufgebaut wird.

Es ist vorteilhaft, den Separator/Elektrodenverbund vor der Tränkung mit einem flüssigen organischen Elektrolyten auf einen Ableiter und/oder eine Gegenelektrode aufzulaminieren. Dabei kann der Separator/Elektrodenverbund auch in Form einer Rolle getränkt werden.

Das Carbonat ist vorzugsweise Ethyl-Methylcarbonat oder Propyl-Methylcarbonat in einer Elektrolytmischung, die vorzugsweise Lithiumperchlorat, Propylencarbonat und Ethylmethylcarbonat enthält. Als weitere Leitsalze kommen noch Lithium-bis(oxalato)borat und Lithiumtrifluortris(pentafluorethyl)phosphat in Betracht, beide wegen ihrer vorteilhaften Eigenschaft, wie das Lithiumperchlorat keine Flusssäure als mögliches Hydrolyseprodukt mit Wasser freizusetzen, als weiterer Elektrolytbestandteil ist neben dem Propylencarbonat (PC) auch Ethylencarbonat (EC) möglich.

Besonders vorteilhaft ist die Anwendung des erfindungsgemäßen Verfahrens zur Herstellung von flachen Zellen, deren Bauhöhe geringer ist als 0,5 mm und deren Zellkapazität kleiner ist als 50 mAh.

Als für einen erfindungsgemäßen Separator/Elektrodenverbund geeignete Polymere werden Polyvinylidenfluoride (PVDF) und Hexafluorpropylene (HFP) verwendet. Als Lösungsmittel können beispielsweise N-Methylpyrrolidin-2-on oder Aceton Verwendung finden. Das poröse Separatormaterial besteht aus Polyoefinen, insbesondere aus Polypropylen, Polyethylen oder kann mehrlagig aus verschiedenen dieser Materialien hergestellt sein.

Als Material der negativen Elektrode kommt metallisches Lithium oder graphisierter Kohlenstoff und gegebenenfalls modifizierte Kohlenstoffe in Betracht sowie Interkalationsverbindungen aus Mischoxiden mit geeigneter Spannungslage, während die positive Elektrode als Lithium interkalierendes Material eine Eisen-, oder -mangansauerstoffverbindung enthält, die gegebenenfalls noch Phosphor oder Lithium enthalten kann.

Die Pastenmischungen für negative Elektrodenfolien enthalten zwischen 55 und 95 Gewichtsprozent, vorzugsweise 65 bis 85 Gewichtsprozent der genannten Materialklassen. Die Pastenmischungen für positive Elektroden enthalten zwischen 65 und 98 Gewichtsprozent, vorzugsweise 65 bis 95 Gewichtsprozent des positiven Elektrodenmaterials. Erfindungsgemäße Pastenmischungen enthalten 50 bis 75 Gewichtsprozent, vorzugsweise 55 bis 65 Gewichtsprozent Lösungsmittel. Das PVDF/HFP-Verhältnis liegt bei positiven Elektrodenfolien zwischen maximal 99,5 und minimal 0,5, vorzugsweise zwischen maximal 80 und minimal 20. Das Verhältnis der Molekulargewichte zwischen PVDF/HFP liegt zwischen 3,2 und 2,8 oder vorzugsweise zwischen 2,3 und 2,5.

Bei negativen Elektrodenfolien liegt das PVDF/HFP-Verhältnis zwischen 99,5 und 0,5, vorzugsweise zwischen 85 und 15. Das Verhältnis der Molekulargewichte liegt zwischen 3,2 und 2,8 oder vorzugsweise zwischen 2,3 und 2,5.

Die Masse wird so hergestellt, dass die Viskosität der Ausgangspaste auf 1 bis 10 Pascal sec (Pa s) vorzugsweise 3 bis 6 Pascal sec (Pa · s) eingestellt ist.

Zur Herstellung von galvanischen Elemente wird die Elektrode zunächst entweder direkt auf den Ableiter oder den Separator aufgerakelt oder über den Zwischenschritt des Aufrakelns auf eine Trägerfolie und folgende Heißlamination hergestellt. Der weitere Zellaufbau erfolgt durch Heißlamination des Elektrode/Separatorverbundes auf den Ableiter oder des Elektrode/Ableiterverbundes auf den Separator.

### Beispiel:

Eine pastöse Masse wird hergestellt, indem man 77 Gewichtsprozent bei 360° C thermisch aktivierten Braunstein (elektrolytisches MnO₂), 6 Gewichtsprozent Graphit (KS 6, Timrex), 2 Gewichtsprozent Leitruß (Super P, Erachem), 7 Gewichtsprozent Polyvinylidenfluorid-Hexafluorpropylen (Kynar Flex 2801, Elf Atochem) und 8 Gewichtsprozent Propylencarbonat (Merck) in Aceton innig vermischt und die so erhaltende Masse auf einen Polyolefinseparator (Polypropylen, Celgard 2500) aufrakelt, das Lösemittel verdampft, das so erhaltene Band Vakuum trocknet (110° C, 48 h), mit einem organischen Lithiumelektrolyten der Zusammensetzung 0,96 M LiClO₄ in 87:13 Vol% Propylencarbonat zu Ethylmethylcarbonat tränkt, die Separator/Elektrode Verbundstückchen in 1,6 x 2,3 cm² Größe ausstanzt und in ein Kupferfoliengehäuse einlegt, auf dessen Deckelseite Lithium zuvor aufgepresst wurde, dessen Becherseite mit einem graphitbasierten Leitfähigkeitsverbesser versehen ist, und Becher und Deckel mit einer Isolationsschicht, dort wo Kupfer auf Kupfer trifft, ultraschallverschweißt.

### Vergleichendes Beispiel:

Statt Ethylmethylcarbonat wurden dem Elektrolyten aus obigem Beispiel Dimethylcarbonat sowie Diethylcarbonat zugesetzt. In beiden Fällen wurden sowohl erheblich längere Eindringzeiten, unvollständiges Eindringen sowie rasches Abdampfen beobachtet. Als Indikator hierfür diente die Schwarzfärbung des anfänglich weißen Bandes sowie dessen Rückkehr zur weißen Färbung.

## Patentansprüche

1. Verfahren zur Herstellung von galvanischen Elementen mit einem flüssigen organischen Elektrolyten, die einen Separator/Elektrodenverbund enthalten, der mindestens eine Lithium interkalierende Elektrode besitzt, in deren Polymermatrix im Polymer unlösliche elektrochemisch aktive Materialien fein dispergiert sind, **dadurch gekennzeichnet, dass** der Elektrolyt zwischen 2 und 15 Gewichtsprozent einer Kohlen-Wasserstoff-Sauerstoffverbindung (Carbonat) enthält, die ein zentrales Kohlenstoffatom besitzt, an das ein Sauerstoffatom doppelt und zwei Sauerstoffatome einfach gebunden sind, wobei der einfach gebundene Sauerstoff nicht durch weitere Atome oder Gruppen abgesättigt ist und sich an die einfach gebundenen Sauerstoffatome je eine Kohlenwasserstoffkette anschließt, deren Länge maximal vier Kohlenstoffe beträgt und sich die zwei Ketten um mindestens eine, aber höchstens drei CH₂-Gruppen unterscheiden und mit diesem Elektrolyten ein Separator/Elektrodenverbund zuerst getränkt, dann zugeschnitten und anschließend in ein Gehäuse eingebracht wird.

2. Verfahren nach Anspruch 1, **dadurch gekennzeichnet, dass** der Separator/Elektrodenverbund vor der Tränkung mit dem Elektrolyten auf einen Ableiter und/oder eine Gegenelektrode auflaminiert wird.

3. Verfahren nach Anspruch 1 oder 2, **dadurch gekennzeichnet, dass** der Separator/Elektrodenverbund in Form einer Rolle getränkt wird.

4. Verfahren nach einem der vorhergehenden Ansprüche, **dadurch gekennzeichnet, dass** das Carbonat Ethyl-Methylcarbonat oder Propyl-Methylcarbonat ist.

5. Verfahren nach einem der vorhergehenden Ansprüche, **dadurch gekennzeichnet, dass** der Elektrolyt wenigstens eines der Leitsalze Lithiumperchlorat, Lithium-bis(oxalato)borat oder Lithiumtrifluortris(pentafluorethyl)phosphat, und vorzugsweise wenigstens eines der zyklischen Carbonate Propylencarbonat oder Ethylencarbonat enthält.

6. Verfahren nach Anspruch 5, **dadurch gekennzeichnet, dass** der Elektrolyt Ethyl-Methylcarbonat enthält.

7. Galvanisches Element herstellbar nach dem Verfahren nach einem der vorhergehenden Ansprüche.

8. Galvanisches Element nach Anspruch 7, **dadurch gekennzeichnet, dass** die Höhe des galvanischen Elements kleiner ist als 0,5 mm und die Zellkapazität kleiner ist als 50 mAh.
